# EUROPÄISCHE PATENTSCHRIFT

(11) **EP 0 682 454 B1**
(45) Veröffentlichungstag und Bekanntmachung des Hinweises auf die Patenterteilung: **11.08.1999**
(21) Anmeldenummer: 95106781.8
(22) Anmeldetag: 05.05.1995
(51) Int. Cl.: H04N 7/26

(54) **Verfahren und Vorrichtung zur Transcodierung von Bitströmen mit Videodaten**
Method and apparatus for transcoding bitstreams of videodata
Procédé et dispositif de transcodage des flux de bits de données vidéo

(30) Priorität: 13.05.1994 DE 4416967
(43) Veröffentlichungstag der Anmeldung: 15.11.1995
(73) Patentinhaber: DEUTSCHE THOMSON-BRANDT GMBH, 78048 Villingen-Schwenningen (DE)
(72) Erfinder: Adolph, Dirk, D-30952 Ronnenberg (DE); Westerkamp, Dietrich, D-30966 Hemmingen (DE); Herpel, Carsten, D-30171 Hannover (DE); Hütter, Ingo, D-29223 Celle (DE)
(74) Vertreter: Hartnack, Wolfgang, Dipl.-Ing.

(56) Entgegenhaltungen:
- EP-A- 0 627 858
- EP-A- 0 637 893
- WO-A-94/23536
- SMPTE JOURNAL, Bd. 101, Nr. 7, Juli 1992 US, Seiten 466-470, G.REITMEIER ET AL. 'The Digital Hierarchy - A Blueprint for Television in the 21st Century'
- SIGNAL PROCESSING EUROPEAN JOURNAL DEVOTED TO THE METHODS AND APPLICATIONS OF SIGNAL PROCESSING., Bd. 2, Nr. 2, August 1990 AMSTERDAM NL, Seiten 221-239, 'Draft Revision of Recommendation H.261: Video Codec for Audiovisual Services at px64kbit/s'
- PATENT ABSTRACTS OF JAPAN vol. 7 no. 10 (P-168) ,14.Januar 1983 & JP-A-57 166640 (HITACHI SEISAKUSHO KK) 14.Oktober 1982,
- PATENT ABSTRACTS OF JAPAN vol. 16 no. 520 (P-1444) ,10.Juli 1992 & JP-A-04 192080 (MITSUBISHI ELECTRIC CORP.) 10.Juli 1992,

## Beschreibung

### Stand der Technik

Die Codierung oder Decodierung von Videodaten mit den zugehörigen Audio- und/oder sonstigen Daten kann beispielsweise nach den Normen ISO/IEC 11172 (MPEG1) oder ISO/IEC 13818 (MPEG2) erfolgen. In manchen Fällen möchte man einen nach derartigen Normen codierten Bitstrom umsetzen in einen Bitstrom mit einer anderen Datenrate. Aus der Norm ISO/IEC 13818-2, Kapitel 7.8, "SNR scalability", ist es bekannt, zu diesem Zweck einen Datenstrom mit zwei Layern zu generieren, wobei ein entsprechender Decoder entweder nur einen Layer mit niedriger Auflösung oder beide Layer mit einer erhöhten Auflösung verarbeitet. Der zweite Layer enthält dabei zusätzliche DCT-Koeffizienten zur Darstellung der erhöhten räumlichen Auflösung.
Hierbei muß jedoch die Codierung bereits einen speziellen Layer erzeugen und es ergibt sich ein zu decodierender Bitstrom mit nur zwei möglichen, fest vorgegebenen Datenraten bzw. Auflösungen.

Um auch andere Datenraten zu ermöglichen, sollte bei der Transcodierung des digitalen Video-Bitstroms eine Bearbeitung des primären Bitstroms derart erfolgen, daß eine niedrigere Datenrate des sekundären Bitstroms bei gleichzeitig hoher Bildqualität möglich ist. Die beste Bildqualität wird durch eine Decodierung des Primär-Bitstroms und anschließende Encodierung in einen Sekundär-Bitstrom erzielt. Hierzu wird jedoch eine umfangreiche Hardware benötigt.

EP-A-0 637 893 zeigt eine solche Video-Bitstrom-Transcodierung, bei der vorhandene Bewegungs- und Modus-Informationen für die Encodierung wiederverwendet werden, wobei der Standard bei der Transcodierung nicht geändert wird.

### Erfindung

Der Erfindung liegt die Aufgabe zugrunde, ein Verfahren zur Transcodierung von Bitströmen mit Video- einschließlich Bewegungs-Information anzugeben, bei dem die Ausgangs-Datenrate bzw. -Auflösung in weiten Grenzen variiert werden kann und bei dem nur ein reduziertes Maß an Hardware erforderlich ist. Diese Aufgabe wird durch das in Anspruch 1 angegebene Verfahren gelöst.

Der Erfindung liegt die weitere Aufgabe zugrunde, eine Vorrichtung für das erfindungsgemäße Verfahren anzugeben. Diese Aufgabe wird durch die in Anspruch 3 angegebene Vorrichtung gelöst.

Datenreduzierende Codierungsverfahren für Videosignale verwenden oft eine Bewegungs-Prädiktion in Verbindung mit einer entsprechenden Bewegungs-Interpolation. Dazu werden Bewegungsvektoren für Bildpunkt-Blöcke bzw. aus jeweils mehreren Bildpunktblöcken bestehende Macro-Blöcke ermittelt. Je nach Typ (z.B. frame, field, I, P, B) dieser Blöcke bzw. Videodaten sind zahlreiche Prädiktions-Modi möglich. Zum Erreichen einer optimalen Codierung werden alle diese Modi berücksichtigt.
Das erfindungsgemäße Verfahren basiert auf der Wiederverwendung von bewegungskompensierenden Prädiktionsvektoren des Primär-Bitstroms im Sekundär-Bitstrom. Da der Informationsgehalt der Bewegungsvektoren aus dem Primär-Bitstrom auch im Sekundär-Bitstrom seine Gültigkeit behält, ist es nicht nötig, Bewegungsvektoren zur Transcodierung neu zu errechnen. Stattdessen erfolgt eine Encodierung des Sekundär-Bitstroms mit Hilfe der Bewegungsvektoren aus dem Primär-Bitstrom.
Dabei wird die Encodierung des Sekundär-Bitstroms in einem eingeschränkten Prädiktions-Modus durchgeführt, d.h. es sind im Sekundär-Bitstrom nur Prädiktionsmodi zugelassen, die durch den jeweiligen Block-Typ bzw. die Bewegungsinformation des Primär-Bitstroms beschrieben sind. Die Nachverarbeitung des aufgrund der geänderten Datenrate ebenfalls geänderten Prädiktionsfehlers, z.B. die Quantisierung, wird adaptiv an die gewünschte Zieldatenrate angepaßt. Damit kann eine niedrigere Datenrate auch tatsächlich sichergestellt werden.

Vorteilhaft wird durch die Erfindung auch die Verzögerung des Gesamtsignals durch die erforderliche Verarbeitungszeit für die Bitstrom-Transcodierung verringert gegenüber einer vollständigen Decodierung/Encodierung.
Die Videosignale können Luminanz- und/oder Chrominanz-Signale umfassen.

Im Prinzip beinhaltet das erfindungsgemäße Verfahren zur Transcodierung eines Bitstroms mit Videodaten, denen Bewegungsinformation und Videodatentyp-Information zugeordnet sind, von einer ersten Datenrate in eine zweite Datenrate, daß die ankommenden, der ersten Datenrate entsprechenden Videodaten mit Hilfe der daraus gewonnenen Bewegungsinformation und Videodatentyp-Information zumindest teilweise decodiert und unter Verwendung der gleichen Bewegungsinformation und Videodatentyp-Information in die der zweiten Datenrate entsprechenden Videodaten encodiert werden, wobei für die Encodierung eine Bewegungs-Prädiktion und -Interpolation verwendet wird, bei der die Anzahl der möglichen Prädiktions-Modi beschränkt ist auf die für den jeweiligen Videodaten-Typ erlaubten Prädiktions-Modi.

Vorteilhafte Weiterbildungen des erfindungsgemäßen Verfahrens ergeben sich aus den zugehörigen abhängigen Ansprüchen.

Die erfindungsgemäße Vorrichtung zur Transcodierung eines Bitstroms mit Videodaten, denen Bewegungsinformation und Videodatentyp-Information zugeordnet sind, von einer ersten Datenrate in eine zweite Datenrate, ist prinzipiell versehen mit :
- Zwischenspeichermitteln und Analysemitteln, die aus den Videodaten die Bewegungs- und Videodatentyp-Information gewinnen;
- nachfolgenden, der ersten Datenrate zugeordneten Videodaten-Decodierungs-Mitteln, die von der Bewegungs- und Videodatentyp-Information gesteuerte Bewegungsprädiktions- und Bewegungsinterpolations-Mittel enthalten;
- nachfolgenden, der zweiten Datenrate zugeordneten Videodaten-Encodierungs-Mitteln, die von der gleichen Bewegungs- und Videodatentyp-Information gesteuerte Bewegungsprädiktions- und Bewegungsinterpolations-Mittel enthalten, in denen die Anzahl der möglichen Prädiktions-Modi beschränkt ist auf die für den jeweiligen Videodaten-Typ erlaubten Prädiktions-Modi.

Vorteilhafte Weiterbildungen der erfindungsgemäßen Vorrichtung ergeben sich aus den zugehörigen abhängigen Ansprüchen.

### Zeichnung

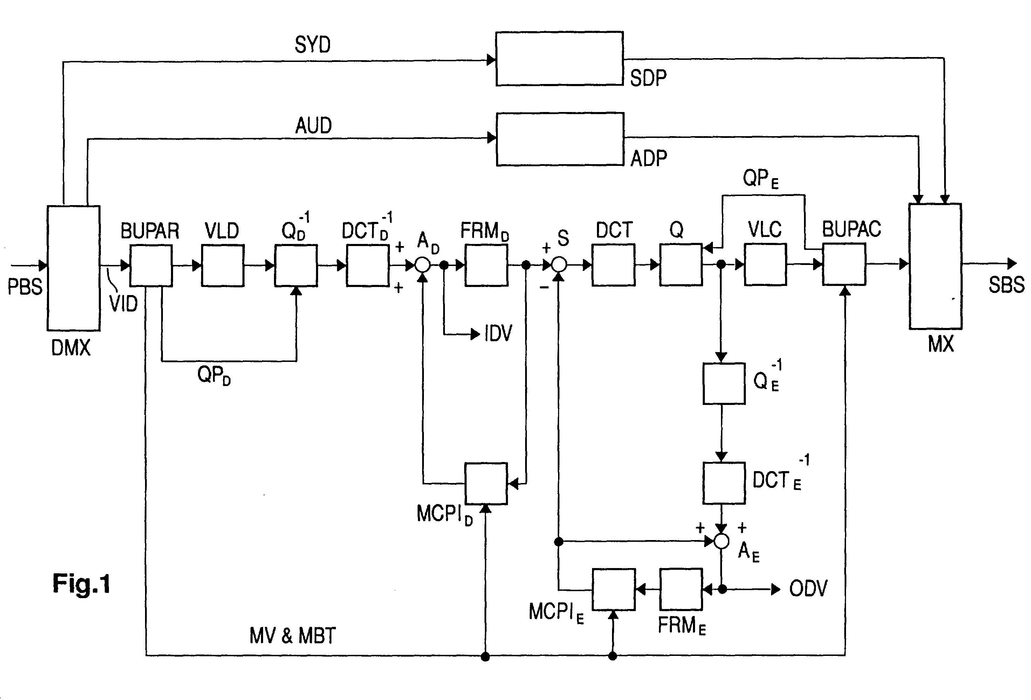

Anhand der Zeichnung sind Ausführungs-Beispiele der Erfindung beschrieben. Diese zeigt in
- Fig. 1: einen erfindungsgemäßen Transcoder.

### Ausführungs-Beispiele

Der Transcoder in Fig. 1 erhält einen Primär-Bitstrom PBS mit einer ersten Datenrate und gibt einen Sekundär-Bitstrom SBS mit einer zweiten, vorzugsweise niedrigeren Datenrate ab. Der Bitstrom PBS wird in eine Demultiplexer DMX separiert in System-Daten SYD, Audio-Daten AUD und Video-Daten VID. Der inverse Vorgang findet am Ausgang in einem Multiplexer MX statt. SYD und/oder AUD können bei Bedarf in einem entsprechenden Systemdaten-Prozessor SDP bzw. einem Audiodaten-Prozessor ADP ebenfalls an die zweite Datenrate angepaßt werden. Der Primär-Bitstrom PBS wird teilweise decodiert und anschließend wieder encodiert. Die Videodaten VID werden zur teilweisen Decodierung einer Puffer- und Analyseschaltung BUPAR zugeführt, die Bewegungsinformation - z.B. Bewegungsvektoren - und Blocktyp-Informationen MV&MBT und Quantisierungs-Parameter QP_{D} separiert und die zwischengespeicherten Videodaten über einen Variable Length-Decoder VLD, einen inversen und von QP_{D} gesteuerten Quantisierer Q_{D}⁻¹, eine inversen DCT-Transformatorschaltung DCT_{D}⁻¹, einen Addierer A_{D} und über Vollbild-Speichermittel FRM_{D} an den Encoder-Teil des Transcoders weiterleitet.
Mit einem Bewegungsprädiktor und -Interpolator MCPI_{D} werden die in FRM_{D} gespeicherten Bildsignale abgegriffen und im Fall von interframe- oder interfield-codierten Bildpunktblöcken/-macroblöcken in Addierer A_{D} zu den dort ankommenden Bilddaten addiert. Am Ausgang von A_{D} steht das decodierte Eingangs-Videosignal IDV zur Verfügung. Der Bewegungsprädiktor und -Interpolator MCPI_{D} wird von der Bewegungs- und Blocktyp-Information MV&MBT gesteuert.
Das Eingangssignal des Encoderteils wird über einen Subtrahierer S, eine DCT-Transformatorschaltung DCT, einen Quantisierer Q, einen Variable Length-Coder VLC und eine Puffer- und Paketbildungs-Schaltung BUPAC dem Multiplexer MX zugeführt, zusammen mit den Ausgangssignalen von SDP und ADP. Die Schaltung BUPAC steuert den Quantisierer Q und fügt die Bewegungs- und Blocktyp-Information MV&MBT in den Video-Bitstrom ein.
Das Ausgangssignal des Quantisierers Q läuft über einen inversen Quantisierer Q_{E}⁻¹, eine inverse DCT-Transformatorschaltung DCT_{E}⁻ ¹, einen Addierer A_{E}, Vollbild-Speichermittel FRM_{E} und einen Bewegungsprädiktor und -Interpolator MCPI_{E} zum invertierenden Eingang von Subtrahierer S. Das Ausgangssignal von MCPI_{E} wird zusätzlich dem zweiten Eingang von Addierer A_{E} zugeführt. Auch der Bewegungsprädiktor und -Interpolator MCPI_{E} wird von der Bewegungs- und Blocktyp-Information MV&MBT gesteuert. Die bei einer vollständigen Encodierung eigentlich erforderliche Bewegungsschätzungs-Hardware entfällt. Am Ausgang von A_{E} steht das decodierte Ausgangs-Videosignal ODV zur Verfügung.
Erfindungsgemäß werden bei der Bewegungs-Prädiktion in MCPI_{E} nur Prädiktionsmodi zugelassen, die durch den jeweiligen Block-Typ bzw. die Bewegungsinformation MV&MBT des Primär-Bitstroms beschrieben sind. Der aufgrund der geänderten Datenrate prinzipiell geänderte Prädiktionsfehler wird durch eine entsprechend geänderte Quantisierungscharakteristik in Q und Q_{E}⁻¹ an die gewünschte Zieldatenrate angepaßt.
Wenn die MPEG2-Codierung verwendet wurde, gelten z.B. folgende Beziehungen zwischen MV&MBT und Prädiktions-Modus (zur Definition von P-, I- und B-Bildern siehe ISO/IEC 13818-2, Kapitel I.4.1.1 und 6.1.2.4.; zur Definition von Bildarten bzw. Blocktypen und Prädiktions-Modi siehe ISO/IEC 13818-2, Kapitel 7.6):
- field picture:
   frame-Prädiktion nicht erlaubt;
- frame picture:
   16*8-Prädiktion nicht erlaubt;
- I-Bilder und B-Bilder:
   dual prime-Prädiktion nicht erlaubt;
- P-Bilder, skipped macroblocks:
   keine Prädiktion (Bewegungsvektor wird zu 0 gesetzt)
- B-Bilder, skipped macroblocks:
   Prädiktion bleibt unverändert (entsprechende vorhandene Bewegungsvektoren werden weiterverwendet)

Der Decoderteil kann z.B. ähnlich wie in Martin Bolton, "Chip, Chip hurra",Funkschau 24/1993, S. 76-81, aufgebaut werden unter Verwendung des MPEG-Decoder-Chips STi3240 und des DCT-Prozessors STV3208, beide von SGS-Thomson. Als Decoder-Chip kann auch der MPEG/H.261-Decoder STi3400 oder der MPEG2/CCIR601-Video-Decoder STi3500 verwendet werden.
Für den Encoder-Teil können die MPEG/H.261-Encoder STi3230 oder STi3400 zum Einsatz kommen.

Die Erfindung kann beispielsweise angewendet werden in digitalen Bildwiedergabe-Geräten oder Bildaufzeichnungs-Geräten, in Bildtelefon-Systemen, in Fernseh-Studios, in Fernsehsignal-Zuführungssystemen, für die Verteilung in Kabelnetzen oder für Satelliten-Übertragungssysteme.

## Patentansprüche

1. Verfahren zur Transcodierung eines Bitstroms (PBS) mit Videodaten (VID), denen Bewegungsinformation und Videodatentyp-Information (MV&MBT) zugeordnet sind, von einer ersten Datenrate in eine zweite Datenrate, bei dem die ankommenden, der ersten Datenrate entsprechenden Videodaten (VID) mit Hilfe der daraus gewonnenen (BUPAR) Bewegungsinformation und Videodatentyp-Information (MV&MBT) zumindest teilweise decodiert (VLD, Q_{D}⁻¹, DCT_{D}⁻¹, A_{D}, FRM_{D}, MCPI_{D}) und unter Verwendung der vorhandenen Bewegungsinformation und Videodatentyp-Information in die der zweiten Datenrate entsprechenden Videodaten encodiert (S, DCT, Q, VLC, Q_{E}⁻¹, DCT_{E}⁻¹, A_{E}, FRM_{E}) werden, wobei der Standard der der zweiten Datenrate entsprechenden Videodaten dem Standard der der ersten Datenrate entsprechenden Videodaten entspricht, insbesondere der MPEG1- oder der MPEG2-Norm, und wobei für die Encodierung eine Bewegungs-Interpolation und eine Bewegungs-Prädiktion (MCPI_{E}) durchgeführt wird, bei der vom ursprünglichen Prädiktions-Modus abweichende Prädiktions-Modi verwendet werden, deren Art beschränkt ist auf solche Prädiktions-Modi, die bei dem teilweisen Decodieren aus dem aktuellen Prädiktions-Modus der ankommenden Videodaten generierbar sind und die für den entsprechenden Videodaten-Typ bei der Encodierung erlaubt sind.

2. Verfahren nach Anspruch 1, bei dem der zu transcodierende Bitstrom (PBS) ebenfalls Audio- (AUD) und/oder Systemdaten (SYD) enthält, die ebenfalls an die zweite Datenrate angepaßt werden.

3. Vorrichtung zur Transcodierung eines Bitstroms (PBS) mit Videodaten (VID), denen Bewegungsinformation und Videodatentyp-Information (MV&MBT) zugeordnet sind, von einer ersten Datenrate in eine zweite Datenrate, versehen mit:
- Zwischenspeichermitteln und Analysemitteln (BUPAR), die aus den Videodaten Bewegungs- und Videodatentyp-Information (MV&MBT) gewinnen;
- nachfolgenden, der ersten Datenrate zugeordneten Videodaten-Decodierungs-Mitteln (VLD, Q_{D}⁻¹, DCT_{D}⁻¹, A_{D}, FRM_{D}), die von der Bewegungs- und Videodatentyp-Information gesteuerte Bewegungsprädiktions- und Bewegungsinterpolations-Mittel (MCPI_{D}) zur zumindest teilweisen Decodierung der der ersten Datenrate entsprechenden Videodaten enthalten,
- nachfolgenden, der zweiten Datenrate zugeordneten Videodaten-Encodierungs-Mitteln (5, DCT, Q, VLC, Q_{E}⁻¹, DCT_{E}⁻¹, A_{E}, FRM_{E}) mit Bewegungsprädiktions- und Bewegungsinterpolations-Mitteln (MCPI_{E}), die mit einer Bewegungs-Interpolation und Bewegungs-Prädiktion encodieren, bei der vom ursprünglichen Prädiktions-Modus abweichende Prädiktions-Modi eingesetzt werden, deren Art beschränkt ist auf solche Prädiktions-Modi, die bei dem teilweisen Decodieren aus dem aktuellen Prädiktions-Modus der ankommenden Videodaten generierbar sind und die für den entsprechenden Videodaten-Typ bei der Encodierung erlaubt sind,
wobei der Codierungs-Standard der der zweiten Datenrate entsprechenden Videodaten dem Standard der der ersten Datenrate entsprechenden Videodaten entspricht, insbesondere der MPEG1- oder der MPEG2-Norm.

4. Vorrichtung nach Anspruch 3, in der bei der Encodierung nachfolgende Zwischenspeichermittel und Einfügungsmittel (BUPAC) angeordnet sind, die zu den encodierten Videodaten die Bewegungs- und Videodatentyp-Information (MV&MBT) hinzufügen.

5. Vorrichtung nach Anspruch 3 oder 4, in der die Videodaten (VID) aus dem ankommenden Bitstrom (PBS) durch Demultiplexer-Mittel (DMX) zusammen mit Audio- (AUD) und/oder Systemdaten (SYD) gewonnen werden und nach der Encodierung in Multiplexer-Mitteln (MX) zu dem abgehenden Datenstrom zusammengefügt werden, wobei die Audio- und/oder Systemdaten ebenfalls von der ersten an die zweite Datenrate angepaßt (ADP, SDP) werden.

## Claims

1. Method for transcoding a bit stream (PBS) with video data (VID), to which motion information and video data type information (MV&MBT) are assigned, from a first data rate into a second data rate, in which the incoming video data (VID), corresponding to the first data rate, are at least partially decoded (VLD, Q_{D}⁻¹, DCT_{D}⁻¹, A_{D}, FRM_{D}, MCPI_{D}) with the aid of the motion information and video data type information (MV&MBT) obtained therefrom (BUPAR) and are encoded (S, DCT, Q, VLC, Q_{E}⁻¹, DCT_{E}⁻¹, A_{E}, FRM_{E}) using the available motion information and video data type information into the video data corresponding to the second data rate, the standard of the video data corresponding to the second data rate corresponding to the standard of the video data corresponding to the first data rate, in particular the MPEG1 or MPEG2 standard, and for the encoding there is carried out a motion interpolation and a motion prediction (MCPI_{E}), in which prediction modes deviating from the original prediction mode are used, the type of which modes is restricted to those prediction modes which, with the partial decoding, can be generated from the current prediction mode of the incoming video data and which are allowed for the corresponding video data type in the encoding.

2. Method according to Claim 1, in which the bit stream (PBS) to be transcoded likewise contains audio (AUD) and/or system data (SYD), which are likewise adapted to the second data rate.

3. Device for transcoding a bit stream (PBS) with video data (VID), to which motion information and video data type information (MV&MBT) are assigned, from a first data rate into a second data rate, provided with:
- buffer-storing means and analysing means (BUPAR), which obtain motion and video data type information (MV&MBT) from the video data;
- followed by video data decoding means (VLD, Q_{D}⁻¹, DCT_{D}⁻¹, A_{D}, FRM_{D}), assigned to the first data rate, which include motion prediction and motion interpolation means (MCPI_{D}) controlled by the motion and video data type information for at least partial decoding of the video data corresponding to the first data rate;
- following video data encoding means (S, DCT, Q, VLC, Q_{E}⁻¹, DCT_{E}⁻¹, A_{E}, FRM_{E}), assigned to the second data rate, with motion prediction and motion interpolation means (MCPI_{E}), in which prediction modes deviating from the original prediction mode are used, the type of which modes is restricted to those prediction modes which, with the partial decoding, can be generated from the current prediction mode of the incoming video data and which are allowed for the corresponding video data type in the encoding, the coding standard of the video data corresponding to the second data rate corresponding to the standard of the video data corresponding to the first data rate, in particular the MPEG1 or MPEG2 standard.

4. Device according to Claim 3, in which, in the case of the encoding, following buffer-storing means and inserting means (BUPAC) are provided, which add the motion and video data type information (MV&MBT) to the encoded video data.

5. Device according to Claim 3 or 4, in which the video data (VID) are obtained together with audio (AUD) and/or system data (SYD) from the incoming bit stream (PBS) by demultiplexer means (DMX) and, after encoding, are combined in multiplexer means (MX) to give the outgoing data stream, the audio and/or system data likewise being adapted from the first data rate to the second data rate (ADP, SDP).

## Revendications

1. Procédé de transcodage d'un flux de bits (PBS) de données vidéo (VID), d'un premier débit de données en un deuxième débit de données, auxquelles sont associées les informations relatives au mouvement et au type de données vidéo (MV&MBT), pour lequel les données vidéo (VID) d'arrivée, correspondant au premier débit de données, sont au moins partiellement décodées (VL_{D}, Q_{D}⁻¹, DCT_{D}⁻¹, A_{D}, FRM_{D}, MCPI_{D}) à l'aide des informations générées (BUPAR) relatives au mouvement et au type de donnée vidéo (MV&MBT) et sont encodées en données vidéo correspondant au deuxième débit de données (S, DCT, Q, VLC, Q_{E}⁻¹, DCT_{E}⁻¹, A_{E}, FRM_{E}) lors de l'utilisation de ces mêmes informations relatives au mouvement et au type de donnée vidéo, où la norme des données vidéo correspondant au deuxième débit de données correspond à la norme des données vidéo correspondant au premier débit de données, en particulier la norme MPEG1 ou la norme MPEG2 et où une prédiction et une interpolation de mouvement (MCPI_{E}) sont utilisées pour l'encodage et pour lesquelles les modes de prédiction utilisés sont différents du mode de prédiction d'origine, dont le mode est limité aux modes de prédiction pouvant être générés à partir du mode de prédiction effectif des données vidéo d'arrivée et aux modes de prédiction autorisés pour le type de données vidéo lors de l'encodage.

2. Procédé conforme à la revendication 1, pour lequel le flux de bits (PBS) devant être transcodé contient également des données audio (AUD) ou système (SYS) qui s'adaptent également au deuxième débit de données.

3. Dispositif de transcodage d'un flux de bits (PBS) de données vidéo (VID), d'un premier débit de données en un deuxième débit de données, auxquelles est associée l'information relative au mouvement et au type de données vidéo (MV&MBT), composé :
- de dispositifs de mémoire temporaire et de dispositifs d'analyse (BUPAR) qui génèrent l'information relative au mouvement et au type de donnée vidéo à partir des données vidéo ;
- de dispositifs de décodage des données vidéo ultérieurs (VL_{D}, Q_{D}⁻¹, DCT_{D}⁻¹, A_{D}, FRM_{D}, MCPI_{D}), associés au premier débit de données, qui contiennent les dispositifs de prédiction de mouvement et d'interpolation de mouvement (MCPI_{D}) pour le décodage au moins partiel des données vidéo correspondant au premier débit de données, commandés par l'information relative au mouvement et au type de données vidéo ;
- de dispositifs d'encodage des données vidéo ultérieurs (S, DCT, Q, VLC, Q_{E}⁻¹, DCT_{E}⁻¹, A_{E}, FRM_{E}), associés au deuxième débit de données, qui contiennent les dispositifs de prédiction de mouvement et d'interpolation de mouvement (MCPI_{E}), pouvant encoder à l'aide de la prédiction de mouvement et d'interpolation de mouvement, pour laquelle les modes de prédiction utilisés sont différents du mode de prédiction d'origine, dont le mode est limité aux modes de prédiction pouvant être générés à partir du mode de prédiction effectif des données vidéo d'arrivée et aux modes de prédiction autorisés pour le type de données vidéo lors de l'encodage, où la norme de codage des données vidéo correspondant au deuxième débit de données correspond à la norme des données vidéo correspondant au premier débit de données, en particulier la norme MPEG1 ou la norme MPEG2.

4. Dispositif conforme à la revendication 3, dans lequel les dispositifs de mémoire temporaire et les dispositifs d'insertion (BUPAC) ultérieurs placés lors de l'encodage ajoutent l'information relative au mouvement et au type de bloc aux données vidéo encodées.

5. Dispositif conforme à la revendication 3 ou 4, dans lequel les données vidéo (VID) sont générées à partir du flux de bits (PBS) d'arrivée à l'aide d'un démultiplexeur (DMX) associé à des données audio (AUD) et/ou système (SYS) et sont assemblées après l'encodage dans des multiplexeurs (MX), où les données audio ou système s'adaptent également du premier au deuxième débit de données (ADP, SDP).
